# EUROPÄISCHE PATENTSCHRIFT

(11) **EP 1 528 993 B1**
(45) Veröffentlichungstag und Bekanntmachung des Hinweises auf die Patenterteilung: **11.11.2009**
(21) Anmeldenummer: 03790710.2
(22) Anmeldetag: 06.08.2003
(51) Int. Cl.: B60R 25/00

(54) **VERFAHREN UND SICHERUNGSSYSTEM FÜR EINE VERSTELLEINRICHTUNG EINES KRAFTFAHRZEUGS**
METHOD AND SAFETY SYSTEM FOR A DISPLACEMENT DEVICE MOUNTED ON A MOTOR VEHICLE
PROCEDE ET SYSTEME DE SECURISATION POUR DISPOSITIF DE DEPLACEMENT MONTE DANS UN VEHICULE AUTOMOBILE

(30) Priorität: 07.08.2002 DE 10236106
(43) Veröffentlichungstag der Anmeldung: 11.05.2005
(73) Patentinhaber: Brose Fahrzeugteile GmbH & Co. KG, Coburg, 96450 Coburg (DE)
(72) Erfinder: KALB, Roland, 96269 Rossach (DE)
(74) Vertreter: Ninnemann, Detlef
(86) Internationale Anmeldenummer: PCT/DE2003/002690
(87) Internationale Veröffentlichungsnummer: WO 2004/020258

(56) Entgegenhaltungen:
- EP-A- 1 044 857
- EP-A- 1 060 922
- DE-A- 19 946 993
- DE-C- 19 741 438
- GB-A- 2 336 221

## Beschreibung

Die Erfindung betrifft ein Verfahren und ein Sicherungssystem für eine Schließeinrichtung eines Kraftfahrzeugs gemäß dem Oberbegriff des Anspruchs 1.

Aus dem Stand der Technik ist bekannt, im Kraftfahrzeug zur Datenübertragung zwischen elektronisch gesteuerten Einrichtungen serielle Datenprotokolle einer Bus-Technologie zu verwenden. So stehen beispielsweise die einzelnen Karosserie-Steuergeräte, wie die zentrale Karosserieelektronik, Kombiinstrument und Steuergeräte in den Türen in Verbindung. Von der zentralen Karosserieelektronik, einem Zentralsteuergerät des Kraftfahrzeugs, werden Freigabesignale insbesondere für die Funktion Zentralverriegelung generiert und an die ausführenden Steuergeräte mittels eines seriellen Datenprotokolls übertragen. Dabei ist die Funktion der Verriegelung von diesen Freigabesignalen abhängig.

Darüber hinaus ist bekannt, bei einem kompletten Ausfall des Bus-Systems die Türsteuergeräte automatisch in einen Notlauf-Betrieb umzuschalten, um sicherheitsrelevante, freigabeabhängige Funktionen weiterhin zu ermöglichen. Es hat sich jedoch herausgestellt, daß schon beim Ausfall eines Teils der über den Bus verbundenen Elektroniken (Zentralsteuergerät oder daran angeschlossene weitere Geräte des Kraftfahrzeugs) wichtige oder sogar sämtliche Funktionen der Verstellsysteme blockiert sein können, weil eine ausgefallene Elektronik nicht mehr die Daten liefern konnte, die zur Generierung der Freigabesignale notwendig waren. Derartige Notlaufbetriebe für Fensterheber sind beispielsweise aus der EP 1 060 922 A oder der DE 199 28 101 C2 bekannt.

Zudem ist die technische Funktionalität der Verstellsysteme von der Funktionsfähigkeit und Zuverlässigkeit der Steuergeräte abhängig. Unfallsituationen, die zu einer Teilzerstörung der Steuerungselektroniken führen, bergen die Gefahr parasitäre Widerstände zu generieren, die eine Isolation zwischen zwei Leiterbahnen der Elektronik des Türsteuergerätes deutlich herabsetzen. Derart verursachte parasitäre Widerstände können Werte von wenigen hundert Ohm aufweisen. Entsteht dieser Widerstand zwischen einem Ansteuerungsanschluß eines Leistungsschalters und einem festen Potential, insbesondere der Batteriespannung oder des Masseanschlusses, kann dies zu einem unerwünschten Ansteuern des Leistungsschalters und in Folge zu einer unerwünschten Verstellung der Verstelleinrichtung führen.

Der Ausfall von Teilen der Fahrzeugelektrik, insbesondere des Bus-Systems oder des Steuergerätes durch Crasheinwirkungen kann durch die unerwünschte Verstellung der Verstelleinrichtung in der unfallbedingten Notsituation zu zusätzlichen Gefährdungen führen.

Die EP 1 044 857 A2 offenbart eine elektronische Zündstartschalter- und Lenkradverriegelungsvorrichtung für ein Kraftfahrzeug, die eine Zündstartschaltereinheit und eine Lenkradverriegelungseinheit aufweist, die miteinander gekoppelt sind. Soll der Fahrzeugmotor über die Zündstartschaltereinheit gestartet werden, so wird zunächst abgefragt, ob sich die Lenkradverriegelungseinheit in einem entriegelnden Zustand befindet. Das Starten des Motors wird nur freigegeben, wenn dies der Fall ist.

Die EP 1 060 922 A1 offenbart einen Schaltkreis zur Steuerung fremdkraftbetriebener Fensterheber, Schiebedächer oder Türschlösser in Kraftfahrzeugen, bei dem eine Ansteuerung eines Leistungstreibers zur Betätigung nur ermöglicht wird, wenn ein Bedienungsschalter betätigt und ein Schaltelement geschaltet ist.

Der Erfindung liegt die Aufgabe zu Grunde, ein Verfahren und ein System zur Sicherung einer Schließeinrichtung eines Kraftfahrzeugs anzugeben, das die Öffnung der Schließeinrichtung bei einem Ausfall von Teilen des Systems ermöglicht und zugleich die Gefahr von automatischen Ansteuerungen in einen nicht erwünschten Zustand oder manuellen Fehlfunktionen verringert.

Diese Aufgabe wird durch das Sicherungssystem mit den Merkmalen des Patentanspruchs 1 und durch das Verfahren mit den Merkmalen des Patentanspruchs 14 gelöst. Vorteilhafte Weiterbildungen der Erfindung sind den Unteransprüchen zu entnehmen.

Demgemäß ist ein Sicherungssystem für eine Schließeinrichtung eines Kraftfahrzeugs vorgesehen, wobei ein Steuergerät, das Bestandteil des Sicherungssystems ist, mindestens einen Leistungsschalter zum Steuern einer elektromechanischen Einheit in den Zustand "Sperren", auch "safe" genannt, aufweist und welcher durch ein Zentralsteuergerät zusätzlich beeinflußbar ist. Dieser Sperrzustand unterscheidet sich von Verriegelungszuständen "Entriegelt" und "Verriegelt" der Schließeinrichtung der Kraftfahrzeugtür.

Ist die elektromechanische Einheit im Zustand "Entriegelt", läßt sich die Kraftfahrzeugtür manuell sowohl von außen als auch von der Kraftfahrzeuginnenseite her öffnen oder die Kraftfahrzeugtür ist automatisch mittels eines motorischen Antriebs zu öffnen.

Im Zustand "Verriegelt" ist die Kraftfahrzeugtür von außen her nicht mehr zu öffnen, jedoch sind weiterhin alle mechanischen Funktionen der elektromechanischen Einheit aktiviert, so daß die Kraftfahrzeugtür von innen zu öffnen ist, was auch hilfweise durch ein entsprechendes Werkzeug von außen möglich ist, sollte sich der Fahrzeugbenutzer unbeabsichtigt ausgesperrt haben.

Um einen Diebstahl des Kraftfahrzeugs zu verhindern, werden die elektromechanischen Einheiten des Kraftfahrzeugs in den Zustand "Sperren" versetzt. Im Zustand "Sperren" sind alle mechanischen Funktionen der elektromechanischen Einheit deaktiviert, so daß die Kraftfahrzeugtür mit dem hilfswerkzeug oder vom Kraftfahrzeuginneren aus nicht mehr manuell durch die Betätigung von mechanischen Komponenten der elektromechanischen Einheit zu öffnen ist.

Diese unterschiedlichen Zustände werden durch die elektromechanische Einheit bewirkt, die durch die Zuführung von elektrischer Energie mittels mechanischer Verstellungen zumindest die Zustände "Entriegelt", "Verriegelt" und "Sperren" herbeiführt. Die beschriebenen Zustände können prinzipiell für die jeweiligen Kraftfahrzeugtüren oder auch die Heckklappe des Kraftfahrzeugs unterschiedlich sein.

Bevorzugt werden die Zustände aller Schließeinheiten eines Automobiles durch das Zentralsteuergerät mittels serieller Datenprotokolle aufeinander abgestimmt.

Hierzu ist ein Zentralsteuergerät vorgesehen, das Signalverbindungen, insbesondere eine serielle Busverbindung, zu den Steuergeräten der jeweiligen Tür des Kraftfahrzeugs aufweist. Diese Signalverbindungen ermöglichen eine Datenübertragung zur Herbeiführung der gewünschten Zustände, indem die elektromechanische Einheit durch das Zentralsteuergerät über die Signalverbindungen ansteuerbar ist. Beispielsweise ermöglichen die Signalverbindungen eine Datenübertragung zur Übermittlung von gewünschten Zuständen vom Zentralsteuergerät an die jeweiligen Steuergeräte zur Ansteuerung der lokalen Schließeinrichtung.

Die Datenübertragung ist in einem einfachen Fall ein zu dem jeweiligen Zustand zugeordnetes Signal, eine Spannung oder Binärdaten. Komplexere Verbindungen ermöglichen eine Verbesserung der Zuverlässigkeit der Übertragung und die Übertragung von Befehlen, Statusdaten und/oder Diagnosedaten der elektromechanischen Einheit oder von Bedienelementen.

Zur Sicherung dieses Systems ist das Türsteuergerät mit dem Zentralsteuergerät über eine von den Signalverbindungen unabhängige elektrische Leitungsverbindung verbunden. Für eine Unabhängigkeit dieser elektrischen Leiturigsverbindung ist es notwendig, daß die über die Signalverbindungen übertragenen Spannungen oder Signale diese unabhängige elektrische Leitungsverbindung nicht stören. Eine besonders zweckmäßige und einfache Ausführung der Erfindung sieht vor, daß als unabhängige elektrische Leitungsverbindung ein von den Signalverbindungen elektrisch isolierter, separater Leiter verwendet wird.

Über diese unabhängige elektrische Leitungsverbindung ist ein Potential eines Ansteuerungsanschlusses des zuvor genannten Leistungsschalters zur Bestromung der elektromechanischen Einheit oder ein Leistungsanschluß des Steuergerätes, der mit der elektromechanischen Einheit verbindbar ist, von dem Zentralsteuergerät steuerbar. Die Steuerung erfolgt vorzugsweise direkt, indem der Ansteuerungsanschluß oder der Leistungsanschluß mit dem Zentralsteuergerät über die unabhängige elektrische Leitungsverbindung direkt elektrisch verbunden ist. Alternativ könnte das Potential des betreffenden Anschlusses vom Zentralsteuergerät auch indirekt steuerbar sein, indem zwischen der unabhängigen elektrischen Leitung und dem betreffenden Anschluß ein weiteres logisches Element, beispielsweise ein Schalttransistor zwischengeschaltet ist.

Demzufolge erfolgt über die unabhängige elektrische Leitungsverbindung von der Zentralelektronik zu den jeweiligen lokalen Steuergeräten die Ansteuerung mit einer zusätzlichen Freigabeabhängigkeit, wobei ohne diese Freigabe ein Ansteuern der elektromechanischen Einheit in den Zustand "Sperren" nicht möglich ist.

Gemäß einer vorteilhaften Weiterbildung der Erfindung gibt das Zentralsteuergerät die Ansteuerung der elektromagnetischen Einheit in Richtung "Sperren" nur dann frei, wenn die Funktionsfähigkeit der seriellen Datenübertragung über die Signalverbindung gewährleistet ist, was beispielsweise durch eine fortlaufende Statusabfrage aller beteiligten Steuergeräte und des Zentral steuergeräte erfolgen kann. Hierzu weist das Zentralsteuergerät vorteilhafterweise eine Auswertevorrichtung auf, die zur Steuerung des Leistungsanschlusses in Abhängigkeit von einem Zustand oder einem Notbetrieb der Signalverbindungen ausgebildet ist. Diese Auswertevorrichtung fragt beispielsweise zyklisch die Knoten eines Bussystems der Signalverbindungen ab, um deren Funktionsfähigkeit und die Funktionsfähigkeit der Signalverbindungen zu prüfen. Vorteilhafterweise werden zusätzlich Fahrzeugzustände, insbesondere der Zündungszustand ausgewertet. Eine ausgeschaltete Zündung ist dabei eine weitere Bedingung zur Steuerung des Potentials des Ansteuerungsanschlusses. Ist zumindest eine Bedingung nicht erfüllt, beispielsweise der Ausfall des seriellen Datenprotokolls aufgrund physikalischer Einwirkungen im Crashfall, ist die Freigabebedingung nicht erfüllt, d.h. diese wird zurückgesetzt, so daß das Potential auf die unabhängige elektrische Leitungsverbindung durch das Zentralsteuergerät nicht gesteuert wird.

Eine vorteilhafte Ausgestaltung der Erfindung sieht vor, daß zur Steuerung das Potential auf diese unabhängige elektrische Leitungsverbindung schaltbar ist. Vorzugsweise weist der Ausgang des Zentralsteuergerätes für diesen Schaltvorgang einen niederohmigen Ausgang auf, der die Neigung dieser unabhängigen elektrischen Leitungsverbindung auf Störeinflüsse empfindlich zu reagieren, deutlich reduziert. Ein derartiger niederohmiger Ausgang wird beispielsweise durch die Verwendung von Schalttransistoren realisiert, die neben dem Anschluß zur unabhängigen elektrischen Leitungsverbindung einen weiteren Anschluß zu einer Strom- oder Spannungsquelle, beispielsweise zu der Batteriespannung Ub oder zur Masse aufweisen.

Aufgrund des geringen Ausgangswiderstandes haben parasitäre Widerstände, die in einer Unfallsituation auftreten können, nur einen geringen Einfluss auf dieses an der unabhängigen elektrischen Leitungsverbindung anliegende Potential. Zudem bietet in einer anderen Ausgestaltung der Erfindung das Schalten der Batteriespannung bzw. des Masseanschlusses die Möglichkeit, über diese unabhängige elektrische Leitungsverbindung die Antriebsenergie für die elektromechanische Einheit zumindest für eine Verstellrichtung zu übertragen.

In einer weiteren Ausgestaltung der Erfindung weist das Zentralsteuergerät mindestens einen Schalter zum Schalten von mindestens zwei unterschiedlichen Potentialen auf. Diese Potentiale sind beispielsweise das genannte Massepotential oder das Batteriespannungspotential. Wird dagegen eine digitale Auswertung des Potentials bevorzugt, kann auch ein Logikpegel, beispielsweise ein Pegel von 5 Volt, als eines des zwei unterschiedlichen Potentiale dienen. Mittels dieses Umschaltens der beiden Potentiale wird vermieden, daß in einem Zeitzustand ein hochohmiger Ausgang des Zentralsteuergerätes zu einem undefinierten Potential auf der unabhängigen elektrischen Leitungsverbindung führt.

Um eine weitere Erhöhung der Sicherheit dieses Sicherungsystems zu erreichen, sind in einer besonders vorteilhaften Weiterbildung der Erfindung zum Steuern des Zustands "Sperren" die Steuerung des Potentials durch das Zentralsteuergerät und einer Ansteuerung durch die Logik des Steuergerätes logisch UND verknüpft. Die Logik des Türsteuergerätes ist dabei beispielsweise ein im Türsteuergerät integrierter Mikrocontroller, der wiederum über eine der Signalverbindungen mit dem Zentralsteuergerät verbunden sein kann. Durch diese logische UND-Verknüpfung wird eine Sicherungsredundanz erzeugt, die den Einfluß parasitärer Widerstände weiter reduziert. Weiterhin kann mit der Prüfung der Eingangszustände der logischen UND-Verknüpfung geprüft werden, ob das Steuergerät der Tür und das Zentralsteuergerät sich in einem Normalbetrieb befinden.

Eine vorteilhafte Ausgestaltung dieser Weiterbildung der Erfindung sieht vor, daß zur logischen UND-Verknüpfung der Schalter des Zentralsteuergerätes und ein Schalter der Logik des Türsteuergerätes eine Reihenschaltung bilden. Die Schalter sind bevorzugt mechanische Schalter, insbesondere Schalttransistoren, die wiederum über einen Steuerungsanschluss verfügen. Eine erste Untervariante dieser Ausgestaltung der Erfindung sieht vor, daß beide Schalter direkt elektrisch miteinander verbunden sind. Alternativ sieht die zweite Untervariante dieser Ausgestaltung vor, daß beide Schalter über ein weiteres Element insbesondere über mindestens einen Anschluss des Leistungsschalter bzw. des Leistungsanschlusses des Türsteuergerätes miteinander verbunden sind. Vorzugsweise ist das Potential zur Ansteuerung des Leistungsschalters zwischen dem Massepotential und einem Ansteuerpotential, was das kleiner oder gleich des Batteriepotentials sein kann, schaltbar.

Um eine weitere Erhöhung der Sicherheit dieses Sicherungssystems zu erreichen, erfolgt in einer vorteilhaften Ausgestaltung der Erfindung in jedem lokalen Steuergerät zur Ansteuerung der elektromechanischen Einheit eine vorzugsweise permanente Plausibilitätsprüfung, in der das Freigabepotential der unabhängigen elektrischen Leitungsverbindung nur dann aufgeschaltet wird, wenn die Bedingungen "Zündung aus" und "ungestörte Signalverbindungen" erfüllt sind.

Eine bevorzugte Weiterbildung der Erfindung sieht vor, daß die Verbindungen Bestandteil eines Bussystems sind. Dieses Bussystem ist vorzugsweise ein CAN-Bussystem, daß eine Verbindung mit dem Zentralsteuergerät und weiteren Geräten des Kraftfahrzeuges ermöglicht. Wird zumindest eine bidirektionale Verbindung, beispielsweise die eines CAN-Busses genutzt, ist eine Übertragung von Statusdaten zwischen den Geräten des Kraftfahrzeuges möglich. Neben den Statusdaten können weitere Informationen über einen Betriebsmodus, beispielsweise einem Notbetrieb während einer Unfallsituation oder einem Defekt der Geräte und einem Normalbetrieb übertragen werden. Weitere Ausgestaltung dieser Weiterbildung läßt zusätzlich eine Übertragung von Diagnosedaten über das CAN-Bussystem zu, die die aktuelle Zuverlässigkeit einzelner Elemente des Sicherungssystems, insbesondere die Zuverlässigkeit der Potentiale bzw. der unabhängigen elektrischen Leitungsverbindung an das Zentralsteuergerät protokollieren.

Eine besonders vorteilhafte Ausgestaltung der Erfindung sieht vor, daß das Steuergerät einen Mikrocontroller aufweist. Bestandteil dieses Mikrocontrollers ist beispielsweise eine Logik, die die logische UND-Verknüpfung mit der Steuerung des Zentralsteuergerätes ermöglicht. Weiterhin dient dieser Mikrocontroller zur Steuerung und Berechnung weiterer Operationen der Funktionselemente der Kraftfahrzeugtür. Dieser Mikrocontroller ist zudem zur Ansteuerung mit dem Leistungsschalter über dessen Ansteuerungsanschluss verbunden. Hierzu kann ein Ausgangs-PIN des Mikrocontrollers direkt mit einem diskreten Leistungsschalter in Form eines Leistungstransistors oder eines Relais' verbunden sein. Alternativ ist ebenso eine indirekte Beschaltung über eine weitere Logik des Steuergerätes der Tür oder über eine Logik des Zentralsteuergerätes möglich. Für eine Ansteuerung des Relais' kann die Verbindung über einen Treibertransistor zur Bestromung der Relaisspule vorteilhaft sein. Alternativ zur Verbindung über Leitungselemente einer Platine kann der Mikrocontroller zusammen mit dem Leistungsschalter auf einem Halbleiterchip als sogenannte Smart-Power-Technologie integriert sein.

In einer vorteilhaften Weiterbildung der Erfindung ist vorgesehen, daß der Mikrocontroller des Steuergerätes mit der unabhängigen elektrischen Leitungsverbindung zur Auswertung wirkverbunden ist. Diese Wirkverbindung ermöglicht die Detektion von Zuständen und Fehlfunktionen der Leitungsverbindung bzw. der übertragenden Signale oder Potentiale. Diese Fehlfunktionen können von dem Steuergerät ausgewertet werden, oder alternativ in einer vorteilhaften Ausgestaltung dieser Weiterbildung der Erfindung ist vorgesehen, daß der Mikrocontroller des Steuergerätes über eine der Signalverbindungen einen Status des Potentials des Ansteuerungsanschlusses des Leitungsschalters oder des Zustands der elektromechanischen Einheit an das Zentralsteuergerät überträgt. In diesem Fall ist eine Auswertung der detektierten Zustände und Funktionalitäten durch das Zentralsteuergerät möglich, indem dieses alle von dem Steuergerät detektierten zeitlichen Veränderungen auswertet und mittels einer Plausibilitätsprüfung Abweichung von einem Normalbetrieb registriert und ggf. einen Notbetrieb startet. In diesem Notbetrieb wird nun beispielsweise folgend eine Freigabe zur Ansteuerung der elektromechanischen Einheit in Richtung "Sperren" verändert.

In einer weiteren vorteilhaften Weiterbildung der Erfindung ist zusätzlich ein Fensterheberantrieb der Kraftfahrzeugtür in Richtung "Schließen" über die unabhängige elektrische Leitungsverbindung freigebbar. Mittels dieser Kontrolle der Fensterheberzustände soll verhindert werden, daß ein automatisches Schließen in einem Notbetriebsfall verhindert wird. Ist der Schwerzustand der elektromechanischen Einheit bereits erreicht und ein Entsperren nicht mehr möglich, so wird in einem Notbetriebsfall der Fensterheberantrieb derart angesteuert, daß ein automatisches Öffnen der Fensterscheibe für diesen Notbetrieb möglich ist.

Ein Verfahren zur Sicherung dieser Verstelleinrichtung eines Kraftfahrzeugs ist besonders vorteilhaft einsetzbar. Hierzu kann beispielweise das zuvor dargelegte Sicherungssystem oder ein abgewandeltes Sicherungssystem verwendet werden. Vorteilhafterweise wird zur Steuerung eines Schlosses des Kraftfahrzeugs in den Zustand "Sperren" (safe) in einem ersten Verfahrenschritt die Funktionstüchtigkeit eines Zentralsteuergerätes und dessen Verbindungen ausgewertet. Um den Betriebszustand des Kraftfahrzeugs zu bestimmen, wird eine charakterisierende Kenngröße ausgewertet. Diese Kenngröße ist beispielsweise der Schaltzustand der Zündung des Kraftfahrzeugs, so daß ein "Sperren" des Kraftfahrzeuges nicht erfolgen soll, wenn die Zündung eingeschaltet ist.

Stellt der Betriebszustand des Kraftfahrzeugs für ein "Sperren" durch das Schloß keine Gefahr für den Insassen des Kraftfahrzeuges dar, wird ein Potential zur Steuerung des Schlosses auf eine von den Signalverbindungen unabhängige elektrische Leitungsverbindung aufgeschaltet. Ein Steuerbefehl wird über eine der Signalverbindungen des Zentralsteuergerätes an ein Steuergerät übertragen. Wenn durch die Auswertung eine fehlerfreie Funktionsweise der Geräte und der Signalverbindung detektiert ist, wird durch einen Leistungsschalter des Steuergerätes der Tür mittels des Potentials eine elektromechanische Einheit des Schlosses bestromt und das Schloß in den Zustand "Sperren" geschaltet.

Im folgenden wird die Erfindung anhand von Ausführungsbeispielen bezugnehmend auf schematische zeichnerische Darstellungen näher erläutert.

Dabei zeigen
- FIG 1: ein Kraftfahrzeug mit einer Kommunikationsstruktur,
- FIG 2: ein Blockschaltbild eines Sicherungssystems,
- FIG 3: ein Schaltplanauszug eines Sicherungssystems,
- FIG 4a und FIG 4b: ein Ablaufdiagramm eines Sicherungsverfahrens.

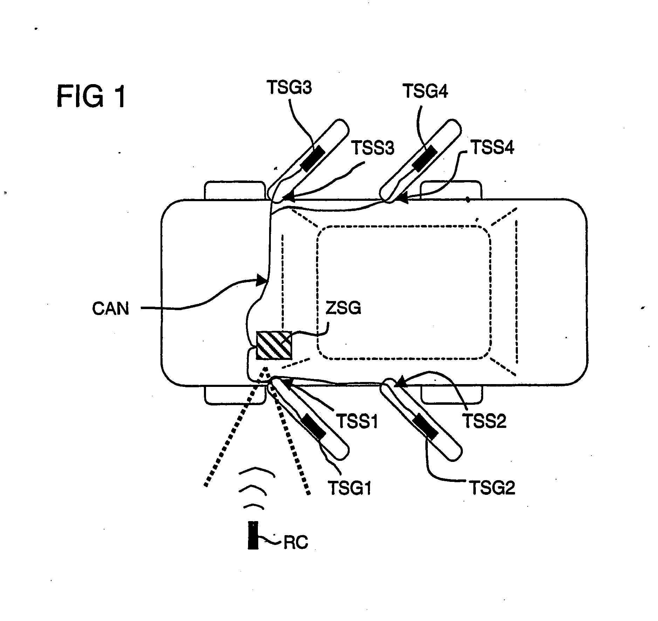

In Figur 1 ist ein Kraftfahrzeug schematisch dargestellt. Zur Kommunikation weist dieses Kraftfahrzeug ein Zentralsteuergerät ZSG auf, das mittels einer Fernbedienung RC beispielsweise einem Kraftfahrzeugschlüssel per Funk, oder optisch angesteuert werden kann. Dieses Zentralsteuergerät ZSG ist über ein Bussystem CAN mit Türsteuergeräten TSG 1, TSG 2, TSG 3 und TSG 4 verbunden. Die Türsteuergeräte TSG 1, TSG 2, TSG 3 und TSG 4 sind in den vier Türen des Kraftfahrzeuges angeordnet. Die Verbindungen der Buskommunikationsstruktur CAN sind von dem Kraftfahrzeuginneren über jeweils eine Türtrennstelle TSS 1, TSS 2, TSS 3 und TSS 4 in die Kraftfahrzeugtüren verlegt und dort an die Türsteuergeräte TSG 1, TSG 2, TSG 3 und TSG 4 angeschlossen.

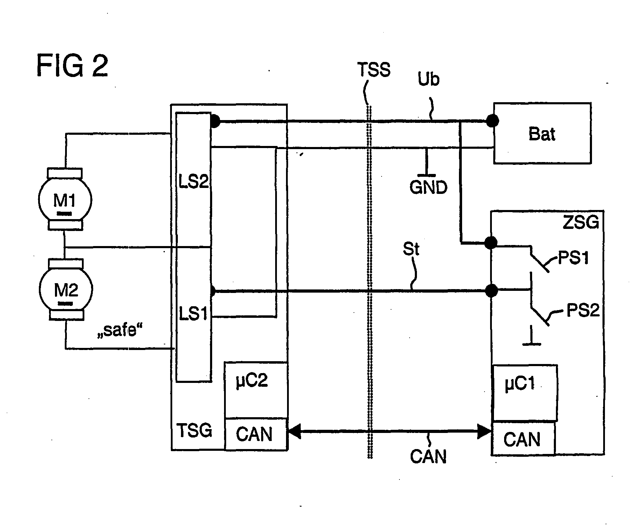

Ein Blockschaltbild des Sicherungssystems ist in Figur 2 dargestellt. In Figur 2 ist beispielhaft ein Türsteuergerät TSG, das über eine Schnittstelle TSS mit dem Zentralsteuergerät ZSG sowie der Batterie des Kraftfahrzeugs Bat verbunden ist, dargestellt. Eine analoge Struktur ergibt sich auch für die weiteren Türsteuergeräte des Kraftfahrzeugs. Die Batterie Bat weist zwei Anschlüsse Ub und GND für das Batteriespannungspotential Ub und den Masseanschluß GND auf. Beide Anschlüsse sind sowohl mit dem Zentralsteuergerät ZSG als auch mit dem Türsteuergerät TSG verbunden. Das Zentralsteuergerät ZSG weist ein Mikrocontroller µC1 und ein CAN-Bus Interface CAN auf. Das CAN-Bus-Interface CAN ist über den CAN-Bus CAN über die Türtrennstelle TSS mit dem CAN-Bus-Interface CAN des Türsteuergerätes TSG verbunden. Eine weitere vom CAN-Bus unabhängige Verbindung St besteht zwischen dem Zentralsteuergerät ZSG und dem Türsteuergerät TSG. Zur Steuerung des Potentials der unabhängigen elektrischen Steuerleitung St weist das Zentralsteuergerät zwei Potentialschalter PS 1 und PS 2 auf, wobei der erste Potentialschalter PS1 mit dem Batteriespannungspotential Ub und der Steuerleitung verbunden ist. Der zweite Potentialschalter PS 2 ist hingegen mit der Steuerleitung St und der Masse GND verbunden.

Das Türsteuergerät TSG ist neben der Verbindung mit dem Zentralsteuergerät über das CAN-Bussystem CAN und der unabhängigen elektrischen Steuerleitung St sowie der Versorgungsleitung zur Kraftfahrzeugbatterie Bat mit weiteren Funktionseinheiten der Kraftfahrzeugtür verbunden. Zwei elektromechanische Verstellantriebe M1 und M2 sind mit dem Türsteuergerät TSG verbunden, das zur Bestromung der beiden Antriebe M1 und M2 Leistungsschalter LS1 und LS2 aufweist. Der erste Verstellantrieb M1 ist ein Verstellantrieb eines Kraftfahrzeugschlosses, wobei dieser Verstellantrieb M1 zum Verriegeln und Entriegeln der Kraftfahrzeugtür dient. Der zweite elektromechanische Antrieb M2 dient demselben Schloß um in den Zustand "Sperren", ein sogenannter Safe-Zustand, zu schalten.

Um diesen zweiten Verstellantrieb mittels des zweiten Leistungsschalter LS2 zu bestromen, ist dieser zweite Leistungsschalter LS2 mittels der Steuerleitung direkt mit dem Zentralsteuergerät verbunden. Der zweite Leistungsschalter und der erste Leistungsschalter LS1 sind als mechanische Leistungsschalter in Form von Relais oder dergleichen oder als Halbleiter-Voll- oder -Halbbrücken ausgebildet. Die Leistungsschalter . LS1 und LS2 weisen hierzu mehrere in Figur 2 nicht dargestellte Steuereingänge auf. Diese Steuereingänge sind mit dem Mirkocontroller µC2 des Türsteuergerätes TSG und der Steuerleitung St oder weiterer Eingangsbeschaltung verbunden.

Um das Schloß in den Zustand "Sperren" zu verstellen, wird zunächst geprüft, ob das Sicherungssystem sich in einem Normalbetrieb befindet. Das Zentralsteuergerät schaltet nachfolgend die Steuerleitung St mittels des Potentialschalters PS1 auf das Betriebsspannungspotential der Batterie Bat Ub. Hierzu wird der zweite Potentialschalter PS2, der die Steuerleitung St zuvor mit der Masse verbunden hat, geöffnet. Als nachfolgenden Schritt sendet das Zentralsteuergerät über den CAN-Bus CAN ein Signal in das Türsteuergerät TSG, das ein Befehl zur Bestromung der zweiten elektromechanischen Antriebseinheit M2 beinhaltet.

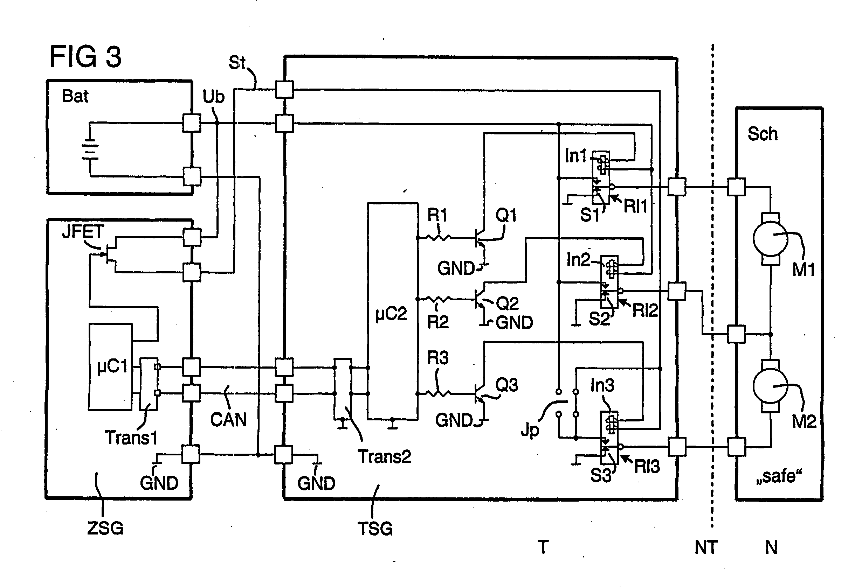

Der in Figur 3 dargestellte Schaltplan ist ein Ausschnitt aus der spezifischeren dargestellten Ausgestaltung der Figur 2. In der Figur 3 ist wiederum die Türtrennstelle TSS dargestellt mit den durch die Türtrennstelle TSS verlegten Verbindungen von dem Zentralsteuergerät ZSG zum Türsteuergerät TSG. Die Verbindung sind dabei wiederum die Steuerleitung St, die Batteriespannungen Ub sowie der Masseanschtuss GND. Zur Kommunikation zwischen dem Türsteuergerät und dem Zentralsteuergerät ist wiederum ein CAN-Bussystem CAN vorgesehen. Das Türsteuergerät TSG ist wiederum mit dem Schloß Sch einer Kraftfahrzeugtür über drei Bestromungsleitungen verbunden. Das Schloß Sch der Kraftfahrzeugtür ist in einem Naßraum N der Kraftfahrzeugtür angeordnet und hierfür gegen ein Eindringen von Feuchtigkeit entsprechend gedichtet.

Hingegen ist das Türsteuergerät TSG auf der Trockenraumseite T der Kraftfahrzeugtür angeordnet und weist keinen zum Naßraum adäquaten Feuchtigkeitsschutz auf. Zur Kommunikation zwischen dem Türsteuergerät und dem Zentralsteuergerät über den CAN-Bus CAN sind die Mikrocontroller µC1 des Zentralsteuergerätes ZSG und der Mikrocontrolller des Türsteuergerätes TSG über Transceiver-Schaltkreise Trans 1 und Trans 2 miteinander verbunden, die eine entsprechende Hardware für die CAN-BusKontrolle zur Verfügung stellen. Zusätzlich ist der Mikrocontroller µC1 des Zentralsteuergerätes mit einem Steueranschluß mit einem Feldeffekttransistor JFET verbunden, der ein Aufschalten der Batteriespannung Ub auf die Steuerleitung St ermöglicht.

Der Mikrocontroller µC2 des Türsteuergerätes TSG weist drei Ausgänge auf, die über Widerstände R1, R2 oder R3 mit Treibertransistorern, in diesem Fall NPN Bipolartransistoren Q1, Q2 bzw. Q 3 verbunden sind. Die Treibertransistoren Q1, Q2 und Q3 sind jeweils mit einer Relaisspule In1, ln2 bzw. In3 eines Relais RL1, RL2 bzw. RL3 verbunden, dabei schalten die Treibertransistoren Q1, Q2 und Q3 die Anschlüsse der Relaisspulen In1, In2 und In3 gegen Masse. Der jeweils andere Anschluß der Relaisspulen In1 und INn2 ist mit der Batteriespannung Ub verbunden, wohingegen die Relaisspule In3 mit dem zweiten Anschluss mit der Steuerleitung St verbunden ist. Dieses dritte Relais RL3 dient zur Bestromung der zweiten elektromechanischen Antriebseinheit M2 des Schlosses Sch in Richtung des Sperrzustandes "Safe".

Um das Schloß in den Sperrzustand zu schalten, muß demzufolge die Steuerleitung mittels des Feldeffekttransistors JFET des zentralen Steuergerätes auf Batteriespannungspotential Ub geschaltet sein und zugleich der Treibertransistor Q3 durch den Mikrocontroller µC2 des Türsteuergerätes TSG über den dritten Widerstand R3 durchgeschaltet sein. Demzufolge ist als Bedingung, um das Schloß in den Zustand "Sperren" zu betreiben, durch eine UND-Verknüpfung der am Treibertransistor Q3 anliegenden Ausgangsspannung des Mikrocontrollers µC2 mit dem geschalteten Feldeffekttransistor JFET des Zentralsteuergerätes ZSG erforderlich.

Für die eigentliche Bestromung der Antriebseinheiten M1 und M2 des Schlosses Sch sind die Relaisschalter S1, S2 und S3 vorgesehen. Diese Relaisschalter sind zum einen mit der Masse GND zum anderen mit der Batteriespannung Ub verbunden. Der Relaisschalter S3 des dritten Relais RL3 kann wahlweise mit der Batteriespannung Ub oder mit der Steuerleitung St über eine Brücke, einen sogenannen Jumper Jp, verbunden sein. Ist der Relaisschalter S3 zusätzlich mit der Steuerleitung St verbunden, wird die' zweite Antriebseinheit M2 des Schlosses Sch über die Steuerleitung St bestromt.

Anstelle der in Figur 3 dargestellten Relais RL1, RL2 und RL3 können alternativ Leistungshalbleiter verwendet werden, die auch in den Mikrocontroller µC2 als Smart-Power-Elemente integrierbar sind. Sind die Halbleiter Leistungsschalter als diskrete Elemente ausgebildet, so erfolgt deren Ansteuerung vorzugsweise gegenphasig, um bei auftreten eines parasitären Widerstandes eine gleichphasige Störspannung auf den Ansteueranschlüssen der diskreten Leistungsschalter zu erhalten, die kein unerwünschtes Durchschalten der Leistungstransistoren verursacht. Dies ist insbesondere daher der Fall, da die parasitären Widerstände auf parallel nebeneinander angeordnete Leitbahnen, die dem Ansteuern dieser diskreten Leistungsschalter dienen, gleichwirkend sind.

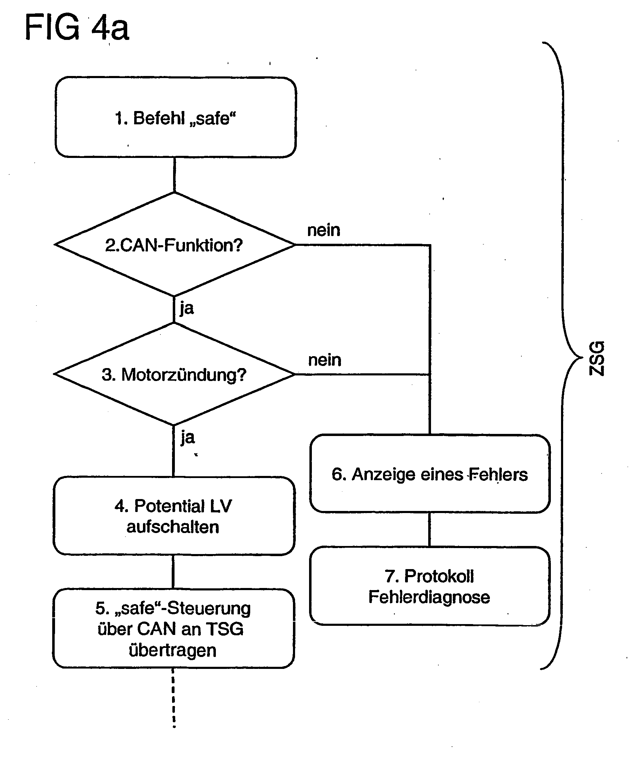

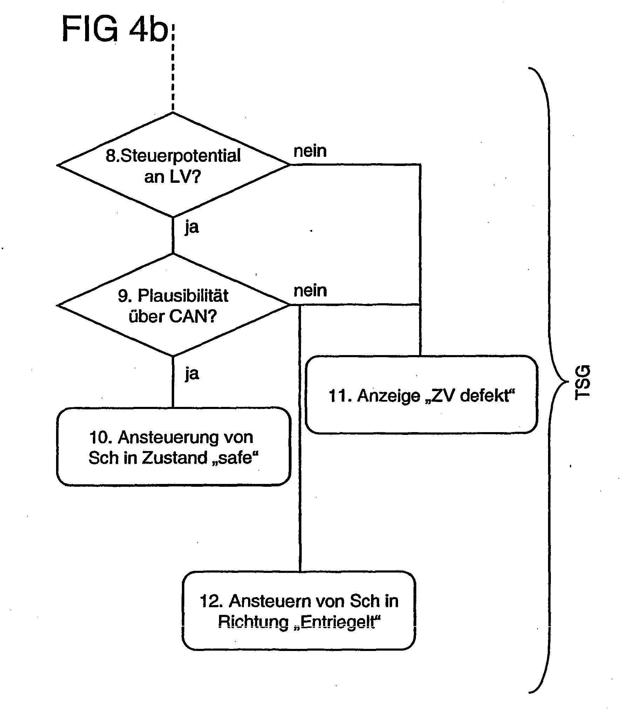

In den Figuren 4a und 4b ist ein Verfahrensablauf zur Sicherung eines Kraftfahrzeugschlosses mittels eines Flußdiagramms schematisch dargestellt. In einem ersten Schritt erhält das Zentralsteuergerät ZSG den Befehl "safe", also die Kraftfahrzeugtüren in den Zustand "Sperren zu verstellen. Dies kann beispielsweise über eine Fernbedienung oder die Betätigung eines der Schlösser mittels eines Kraftfahrzeugsschlüssels erfolgen. In einem zweiten Schritt wird überprüft, ob die Verbindungen des CAN-Bussystems fehlerfrei funktionieren. Dazu kann das Zentralsteuergerät beispielsweise zumindest die Türsteuergeräte TSG der Kraftfahrzeugtüren auf Funktionalität prüfen. Ist eine Funktionalität der CAN-Busverbindung gegeben, erfolgt in einem dritten Schritt die Abfrage nach einer CAN-Größe des Kraftfahrzeugs, in diesem Ausführungsbeispiel nach dem Zustand der Motorzündung.

Ist in diesem dritten Schritt die Motorzündung durch den Zündschlüssel oder dergleichen eingeschaltet, so erfolgt in einem vierten Schritt der Figur 4 a das Aufschalten eines Potentials auf eine unabhängige elektrische Leitungsverbindung St. Nachfolgend wird vom Zentralsteuergerät ZSG über das Bussystem CAN in einem fünften Schritt ein Safe-Steuerbefehl an die Türsteuergeräte TSG übertragen. Ist in dem zweiten Schritt ein Fehler in der CAN-Buskommunikation aufgetreten oder ist die Motorzündung aktiv, wird in einem sechsten Schritt ein Fehler durch das Sicherungssystem angezeigt. Nachfolgend wird in einem siebten Schritt der Fehler in einer Datei protokolliert und für eine spätere Fehlerdiagnose zur Verfügung gestellt.

Figur 4b zeigt den zweiten Teil des Verfahrens zur Sicherung durch das Sicherungssystem, der im Türsteuergerät TSG abläuft. Nachfolgend nach dem fünften Schritt aus der Figur 4a, also der Übertragung des Safe-Steuerungsbefehls über den CAN-Bus an das Türsteuergerät wird im Türsteuergerät TSG durch dessen Mikrocontroller µC1 das Steuerpotential der Steuerleitung St überprüft. Entspricht das Steuerpotential dem Potential zum Sperren der Kraftfahrzeugtür, erfolgt in einem neunten Schritt zusätzlich eine Plausibilitätsprüfung des Gesamtsystems, bei der beispielsweise das Kommunikationssystem sowie die Funktionsfähigkeit des Türsteuergerätes überprüft wird.

Ergibt auch die Plausibilitätsprüfung ein positives Ergebnis wird im zehnten Verfahrensschritt das Schloß Sch in den Zustand Sperren "Safe" angesteuert. Ist im Schritt acht das Steuerpotential zur Ansteuerung der zweiten elektromechanischen Einheit M2 in Richtung Sperren ungeeignet, erfolgt in einem Schritt elf eine Anzeige über den defekten Zustand der Zentralverriegelung ZV. Ebenso erfolgt im elften Schritt die Anzeige eines Defektes der Zentralverriegelung ZV, wenn die Plausibilitätsprüfung des neunten Verfahrensschrittes ein negatives Ergebnis ergibt. In diesem Fall wird zusätzlich zu der Anzeige im Verfahrensschritt elf das Schloß in einem zwölften Verfahrensschritt in Richtung Entriegeln angesteuert, um sichergehen zu können, daß eine eventuell in dem Kraftfahrzeug befindliche Person das Kraftfahrzeug verlassen kann, wenn das Schloß bereits in einem Sperrzustand gelangt sein sollte.

Demnach löst die Erkennung eines Fehlers eine Anzeige eines kritischen Zustandes in einem Fahrzeugdisplay für den Fahrzeugbenutzer aus, und die Türschlösser werden in den Zustand "Entriegelt" angesteuert. Eine Endstellung im Bereich "safe" ist folgend durch die Schloßmechanik nur über die Zwischenstellung "Verriegelt" möglich, so daß im Fehlerfall zwei Bedingungen notwendig erfüllt sein müssen, um aus dem Zustand "Entriegelt" die Kraftfahrzeugtür in den Zustand "Verriegelt" zu bringen.

### Bezugszeichenliste

- ZSG: Zentralsteuergerät
- TSG, TSG1, TSG2, TSG3, TSG4: Türsteuergerät
- TSS, TSS1, TSS2, TSS3, TSS4: Türtrennstelle
- CAN: CAN-Bus
- RC: Schloßfernsteuerung
- M1: Verrieglungsmotor
- M2: Sperrmotor
- LS1, LS2: Leistungschalter, Leistungshalbleiter
- pC1,pC2: Mikrocontroller
- St: Steuerleitung
- PS1, PS2: Schalter, Steuerschalter, Potentialschalter
- Bat: Batterie
- Ub: Batteriespannung
- GND: Masse
- Sch: Schloß
- "safe": Ansteuerleitung zum Sperren
- N: Naßraum
- T: Trockenraum
- NT: Naß-Trockenraum-Trennung
- RI1, RI2, RI3: Relais
- S1, S2, S3: Relaisschalter
- In1, In2, In3: Relaisspule
- Jp: Brücke, Jumper
- Q1, Q2, Q3: NPN Transistor
- R1, R2, R3: Widerstand
- Trans1, Trans2: Transceiver des CAN-Bus
- JFET: Feldeffekttransistor
- ZV: Zentralverriegelung, Zentralsteuerung der Schlösser

## Patentansprüche

1. Sicherungssystem einer Schließeinrichtung zum Verriegeln mindestens einer Fahrzeugtür eines Kraftfahrzeugs, mit
- einem Steuergerät (TSG, TSG1, TSG2, TSG3, TSG4), das mindestens einen Leistungsschalter (LS1, LS2) zum Ansteuern einer elektromechanischen Einheit (M1, M2) in einen Zustand "Sperren" aufweist, und
- einem Zentralsteuergerät (ZSG), das Signalverbindungen (CAN) zu dem Steuergerät (TSG, TSG1, TSG2, TSG3, TSG4) und weiteren Steuergeräten des Kraftfahrzeugs aufweist, wobei zumindest die elektromechanische Einheit (M1, M2) durch das Zentralsteuergerät (ZSG) über die Signalverbindungen (CAN) ansteuerbar ist,
**dadurch gekennzeichnet,**
**dass**
- das Steuergerät (TSG, TSG1, TSG2, TSG3, TSG4) mit dem Zentralsteuergerät (ZSG) über eine von den Signalverbindungen (CAN) unabhängige elektrische Leitungsverbindung (St) verbunden ist und
- ein Potential (Ub, GND) eines Ansteuerungsanschlusses des Leistungsschalters (LS1, LS2) des Steuergeräts (TSG, TSG1, TSG2, TSG3, TSG4) oder ein Leistungsanschluss des Steuergerätes (TSG, TSG1, TSG2, TSG3, TSG4) über die unabhängige elektrische Leitungsverbindung (St) von dem Zentralsteuergerät (ZSG) steuerbar ist,
wobei das Zentralsteuergerät (ZSG) über die unabhängige elektrische Leitungsverbindung (St) das Steuergerät (TSG, TSG1, TSG2, TSG3, TSG4) zum Ansteuern der elektromechanischen Einheit (M1, M2) in den Zustand "Sperren", worin alle mechanischen Funktionen der elektromechanischen Einheit deaktiviert sind, freigibt und ohne diese Freigabe ein Ansteuern der elektromechanischen Einheit (M1, M2) in den Zustand "Sperren" nicht möglich ist.

2. Sicherungssystem nach Anspruch 1, **dadurch gekennzeichnet, dass** das Zentralsteuergerät (ZSG) eine Auswertevorrichtung (µC1) aufweist, die zur Steuerung des Leistungsanschlusses in Abhängigkeit von einem Zustand oder einem Notbetrieb der Signalverbindungen (CAN), insbesondere eines Bussystems (CAN), ausgebildet ist. sind.

3. Sicherungssystem nach einem der vorhergehenden Ansprüche, **dadurch gekennzeichnet, dass** zur Steuerung das Potential (Ub, GND) auf die unabhängige elektrische Leitungsverbindung (St) schaltbar ist.

4. Sicherungssystem nach einem der vorhergehenden Ansprüche, **dadurch gekennzeichnet, dass** das Zentralsteuergerät (ZSG) mindestens einen Schalter (PS1, PS2) zum Schalten oder Trennen von mindestens zwei unterschiedlichen Potentialen (Ub, GND) aufweist.

5. Sicherungssystem nach einem der vorhergehenden Ansprüche, **dadurch gekennzeichnet, dass** zum Steuern des Zustands "Sperren" die Steuerung des Potentials (Ub, GND) durch das Zentralsteuergerät (ZSG) und eine Ansteuerung durch eine Logik µC2) des Steuergerätes (TSG, TSG1, TSG2, TSG3, TSG4) logisch UND verknüpft sind.

6. Sicherungssystem nach Anspruch 5, **dadurch gekennzeichnet, dass** zur logischen UND-Verknüpfung der Schalter (PS1. PS2) des Zentralsteuergerätes (ZSG) und ein Schalter (Q1. Q2, Q3) der Logik (µC2) des Steuergerätes (TSG, TSG1, TSG2, TSG3, TSG4) eine Reihenschaltung bilden.

7. Sicherungssystem nach einem der vorhergehenden Ansprüche, **dadurch gekennzeichnet, dass** das Potential zur Ansteuerung des Leistungsschalters (LS1, LS2) zwischen einem Massepotential (GND) und einem Ansteuerpotential (Ub), das kleiner oder gleich eines Batteriepotentials ist, schaltbar ist, insbesondere um die unabhängige elektrische Leitungsverbindung (St) von dem Ansteuerpotential (Ub) zu trennen und an das Massepotential (GND) zu schalten.

8. Sicherungssystem nach einem der vorhergehenden Ansprüche, **dadurch gekennzeichnet, dass** die Signalverbindungen (CAN) Bestandteil eines BUS-Systems, insbesondere eines CAN-Busses (CAN), sind.

9. Sicherungssystem nach einem der vorhergehenden Ansprüche, **dadurch gekennzeichnet, dass** das Steuergerät (TSG, TSG1, TSG2, TSG3, TSG4) einen Mikrocontroller (µC2) aufweist, der zur Ansteuerung des Leistungsschalters (LS1, LS2) mit dessen Ansteuerungsanschluß verbunden ist.

10. Sicherungssystem nach Anspruch 9, **dadurch gekennzeichnet, dass** der Mikrocontroller (µC2) des Steuergerätes (TSG, TSG1, TSG2, TSG3, TSG4) mit der unabhängigen elektrischen Leitungsverbindung (St) zur Auswertung des aktuellen Potentials (Ub, GND) wirkverbunden ist.

11. Sicherungssystem nach Anspruch 10, **dadurch gekennzeichnet, dass** der Mikrocontroller (µC2) des Steuergerätes (TSG, TSG1, TSG2, TSG3, TSG4) zur Übertragung eines Status des Potentials (Ub, GND) des Ansteuerungsanschlusses, des Leistungsschalters (LS1, LS2) oder des Zustands der elektromechanischen Einheit (M1, M2) an das Zentralsteuergerät (ZSG) über eine der Signalverbindungen (CAN) ausgebildet ist.

12. Sicherungssystem nach einem der vorhergehenden Ansprüche, **dadurch gekennzeichnet, dass** das Steuergerät (TSG, TSG1, TSG2, TSG3, TSG4) in einer Kraftfahrzeugtür und das Zentralsteuergerät (ZSG) außerhalb der Kraftfahrzeugtür, jedoch innerhalb des Kraftfahrzeuges angeordnet ist.

13. Sicherungssystem nach einem der vorhergehenden Ansprüche, **dadurch gekennzeichnet, dass** als Leistungsschalter (LS1, LS2) ein Relais (RL1, RL2, RL3) ansteuerbar ist und die unabhängige elektrische Leitungsverbindung (St) an einen Anschluss einer Relaisspule (In1, In2, In3) angeschlossen ist.

14. Verfahren zur Sicherung einer Schließeinrichtung eines Kraftfahrzeugs, wobei zur Steuerung eines Schlosses des Kraftfahrzeugs in einen Zustand "Sperren", worin alle mechanischen Funktionen den elektrome- chanischen Einheit deaktiviert sind,
- die Funktionstüchtigkeit eines Zentralsteuergerätes (ZSG) und von zugeordneten Signalverbindungen (CAN) ausgewertet wird,
- den Betriebszustand des Kraftfahrzeugs charakterisierende Kenngrößen ausgewertet werden,
- ein Potential (Ub, GND) zur Steuerung des Schlosses auf eine von den Signalverbindungen (CAN) unabhängige elektrische Leitungsverbindung (St) aufgeschaltet wird,
- ein Steuerbefehl über eine der Signalverbindungen (CAN) des Zentralsteuergerätes (ZSG) an ein Tünsteuergerät (TSG, TSG1, TSG2, TSG3, TSG4) übertragen wird und
- durch einen Leistungsschalter (LS1, LS2) des Steuergerätes (TSG, TSG1, TSG2, TSG3, TSG4) mittels des Potentials (UB, GND) eine elektromechanische Einheit (M1, M2) des Schlosses bestromt wird, wenn durch die Auswertung eine fehlerfreie Funktionsweise des Zentralsteuergerätes (ZSG) und der Signalverbindungen (CAN) detektiert ist.

15. Verfahren nach Anspruch 14, **dadurch gekennzeichnet, dass** eine unbeabsichtigte Steuerung des Schlosses des Kraftfahrzeugs in den Zustand "Sperren" verhindert wird, indem im Falle eines Ausfalls, einer Störung oder eines gestarteten Notbetriebes eines Bussystems des Kraftfahrzeugs
- der Ausfall oder die Störung durch ein Zentralsteuergerät . (ZSG) des Kraftfahrzeugs detektiert und insbesondere ein Notbetrieb gestartet wird oder von dem Steuergerät (TSG, TSG1, TSG2, TSG3, TSG4) eine Information über einen gestarteten Notbetrieb über das Bussystem an das Zentralsteuergerät (ZSG) übertragen wird und
- das Zentralsteuergerät (ZSG) ein Anstetierpotential (Ub) auf die mit dem Steuergerät (TSG, TSG1, TSG2, TSG3, TSG4) verbundene, von den Signalverbindungen (CAN) des Bussystem unabhängige Leitungsverbindung (St) schaltet, wobei in Abhängigkeit von dem Ansteuerpotential (Ub) ein Steuern der Schließeinrichtung in den Zustand "Sperren" verhindert wird.

## Claims

1. Safety system of a locking device for locking at least one vehicle door of a motor vehicle, comprising
- a control device (TSG, TSG1, TSG2, TSG3, TSG4) which comprises at least one power switch (LS1, LS2) for actuating an electromechanical unit (M1, M2) into a "blocking" state, and
- a central control device (ZSG) which comprises signal links (CAN) to the control device (TSG, TSG1, TSG2, TSG3, TSG4) and further control devices of the motor vehicle, wherein at least the electromechanical unit (M1, M2) is actuatable through the central control device (ZSG) via the signal links (CAN),
**characterised in that**
- the control device (TSG, TSG1, TSG2, TSG3, TSG4) is connected to the central control device (ZSG) through an electrical connection (St) which is independent of the signal links (CAN) and
- a potential (Ub, GND) of a control connection of the power switch (LS1, LS2) of the control device (TSG, TSG1, TSG2, TSG3, TSG4) or a power connection of the control device (TSG, TSG1, TSG2, TSG3, TSG4) is controllable by the central control device (ZSG) via the independent electrical connection (St),
wherein the central control device (ZSG), via the independent electrical connection (St), authorizes the control device (TSG, TSG1, TSG2, TSG3, TSG4) for actuating the electromechanical unit (M1, M2) into the "blocking" state, in which all mechanical functions of the electromechanical unit are deactivated, and, without the authorization, an actuation of the electromechanical unit (M1, M2) into the "blocking" state is not possible.

2. Safety system according to claim 1, **characterised in that** the central control device (ZSG) comprises an evaluator device (µC1) which is designed to control the power connection in dependence on a state or an emergency operation of the signal links (CAN), more particularly of a bus system (CAN).

3. Safety system according to one of the preceding claims, **characterised in that** the potential (Ub, GND), for the controlling, is switchable onto the independent electrical connection.

4. Safety system according to one of the preceding claims, **characterised in that** the central control device (ZSG) comprises at least one switch (PS1, PS2) for switching or disconnecting at least two different potentials (Ub, GND).

5. Safety system according to one of the preceding claims, **characterised in that** for controlling the "blocking" state the control of the potential (Ub, GND) through the central control device (ZSG) and a control through a logic (µC2) of the control device (TSG, TSG1, TSG2, TSG3, TSG4) are logically AND-linked.

6. Safety system according to claim 5, **characterised in that** for the logic AND-link the switch (PS1, PS2) of the central control device (ZSG) and a switch (Q1, Q2, Q3) of the logic (µC2) of the control device (TSG, TSG1, TSG2, TSG3, TSG4) form a series connection.

7. Safety system according to one of the preceding claims, **characterised in that** the potential for controlling the power switch (LS1, LS2) is switchable between an earth potential (GND) and a control potential (Ub) which is smaller than or equal to a battery potential, in particular in order to disconnect the independent electrical connection (St) from the control potential (Ub) and to switch it to the earth potential (GND).

8. Safety system according to one of the preceding claims, **characterised in that** the signal connections (CAN) are a constituent part of a BUS-system, more particularly a CAN-bus (CAN).

9. Safety system according to one of the preceding claims, **characterised in that** the control device (TSG, TSG1, TSG2, TSG3, TSG4) comprises a micro controller (µC2) which, for controlling the power switch (LS1, LS2), is connected to its control connection.

10. Safety system according to claim 9, **characterised in that** the micro controller (µC2) of the control device (TSG, TSG1, TSG2, TSG3, TSG4) is operatively connected with the independent electrical connection (St) for evaluating the actual potential (Ub, GND).

11. Safety system according to claim 10, **characterised in that** the micro controller (µC2) of the control device (TSG, TSG1, TSG2, TSG3, TSG4) is designed for transferring a status of the potential (Ub, GND) of the control connection, the power switch (LS1, LS2) or the state of the electromechanical unit (M1, M2) to the central control device (ZSG) through one of the signal links (CAN).

12. Safety system according to one of the preceding claims, **characterised in that** the control device (TSG, TSG1, TSG2, TSG3, TSG4) is mounted in a vehicle door and the central control device (ZSG) is mounted outside of the vehicle door, but inside the motor vehicle.

13. Safety system according to one of the preceding claims, **characterised in that**, as power switch (LS1, LS2), a relay (RL1, RL2, RL3) is controllable and the independent electrical connection (St) is connected to a connection of a relay coil (In1, In2, In3).

14. Method for safeguarding a locking device of a motor vehicle, wherein for actuating a lock of the motor vehicle into a "blocking" state, in which all mechanical functions of the electromechanical unit are deactivated,
- the functional reliability of a central control device (ZSG) and associated signal links (CAN) is evaluated,
- characteristic values characterising the operating state of the motor vehicle are evaluated,
- a potential (Ub, GND) for controlling the lock is switched onto an electrical connection (St) independent of the signal links (CAN),
- a control command is transferred, through one of the signal links (CAN) of the central control device (ZSG), to a door control device (TSG, TSG1, TSG2, TSG3, TSG4), and
- through a power switch (LS1, LS2) of the control device (TSG, TSG1, TSG2, TSG3, TSG4), by means of the potential (Ub, GND), an electromechanical unit (M1, M2) of the lock is energised, if, through evaluation, a fault-free functioning of the central control device (ZSG) and the signal connections (CAN) is detected.

15. Method according to claim 14, **characterized in that** an unintended actuation of the lock of the motor vehicle into the "blocking" state is prevented **in that** in the event of a failure, a breakdown or a started emergency operation of a bus system of the motor vehicle
- the failure or breakdown is detected through a central control device (ZSG) of the motor vehicle and more particularly an emergency operation is started or an information on a started emergency operation is transferred via the bus system to the central control device (ZSG) by the control device (TSG, TSG1, TSG2, TSG3, TSG4), and
- the central control device (ZSG) switches a control potential (Ub) onto the connection (St) which is connected to the control device (TSG, TSG1, TSG2, TSG3, TSG4) and is independent of the signal links (CAN) of the bus system,
wherein in dependence on the control potential (Ub) an actuation of the locking device into the "blocking" state is prevented.

## Revendications

1. Système de sécurisation d'un dispositif de fermeture pour verrouiller au moins une portière d'un véhicule automobile, avec
- un dispositif de commande (TSG, TSG1, TSG2, TSG3, TSG4) lequel présente au moins un commutateur de puissance (LS1, LS2) pour commander le passage d'une unité électromécanique (M1, M2) à un état de « verrouillage », et
- un appareil de commande central (ZSG), lequel présente des liaisons de signaux (CAN) vers le dispositif de commande (TSG, TSG1, TSG2, TSG3, TSG4) et d'autres dispositifs de commande du véhicule automobile, dans lequel l'une au moins unité électromécanique (M1, M2) pouvant être commandée grâce à l'appareil de commande central (ZSG) via les liaisons de signaux (CAN),
**caractérisé en ce**
**que**
- le dispositif de commande (TSG, TSG1, TSG2, TSG3, TSG4) est relié à l'appareil de commande central (ZSG) par l'intermédiaire d'une liaison câblée électrique (St) indépendante des liaisons de signaux (CAN), et en ce
- **qu'**un potentiel (Ub, GND) d'une borne de commande du commutateur de puissance (LS1, LS2) du dispositif de commande (TSG, TSG1, TSG2, TSG3, TSG4) ou une borne de puissance du dispositif de commande (TSG, TSG1, TSG2, TSG3, TSG4) peut être commandé via la liaison câblée électrique indépendante (St) par l'appareil de commande central (ZSG),
sachant que l'appareil de commande central (ZSG) autorise, via la liaison câblée électrique indépendante (St), le dispositif de commande (TSG, TSG1, TSG2, TSG3, TSG4) à déclencher le passage de l'unité électromécanique (M1, M2) à l'état de « verrouillage » où toutes les fonctions mécaniques de l'unité électromécanique sont désactivées, et qu'un déclenchement pour le passage de l'unité électromécanique (M1, M2) à l'état de « verrouillage » n'est pas possible sans cette autorisation.

2. Système de sécurisation selon la revendication 1, **caractérisé en ce que** l'appareil de commande central (ZSG) présente une unité d'analyse (µC1), laquelle est réalisée pour la commande de la borne de puissance en fonction d'un état ou d'un régime de secours des liaisons de signaux (CAN), en particulier d'un système de bus (CAN).

3. Système de sécurisation selon l'une quelconque des revendications précédentes, **caractérisé en ce que**, pour la commande, le potentiel (Ub, GND) peut être appliqué à la liaison câblée électrique indépendante (St).

4. Système de sécurisation selon l'une quelconque des revendications précédentes, **caractérisé en ce que** l'appareil de commande central (ZSG) présente au moins un commutateur (PS1, PS2) pour commuter ou sectionner au moins deux potentiels distincts (Ub, GND).

5. Système de sécurisation selon l'une quelconque des revendications précédentes, **caractérisé en ce que**, pour le déclenchement du passage à l'état de « verrouillage », la commande du potentiel (Ub, GND) grâce à l'appareil de commande central (ZSG) et une commande grâce à une logique (µC2) du dispositif de commande (TSG, TSG1, TSG2, TSG3, TSG4) sont reliées par une fonction logique ET.

6. Système de sécurisation selon la revendication 5, **caractérisé en ce que**, pour la liaison grâce à la fonction logique ET, le commutateur (PS1, PS2) de l'appareil de commande central (ZSG) et un commutateur (Q1, Q2, Q3) de logique (µC2) du dispositif de commande (TSG, TSG1, TSG2, TSG3, TSG4) forment une connexion en série.

7. Système de sécurisation selon l'une quelconque des revendications précédentes, **caractérisé en ce que** le potentiel pour la commande du commutateur de puissance (LS1, LS2) peut être commuté entre un potentiel de masse (GND) et un potentiel de commande (Ub), lequel est inférieur ou égal à un potentiel de batterie, en particulier pour couper la liaison câblée électrique indépendante (St) du potentiel de commande (Ub) et la connecter au potentiel de masse (GND).

8. Système de sécurisation selon l'une quelconque des revendications précédente, **caractérisé en ce que** les liaisons de signaux (CAN) sont des éléments constitutifs d'un système de bus, en particulier d'un bus CAN (CAN).

9. Système de sécurisation selon l'une quelconque des revendications précédentes, **caractérisé en ce que** le dispositif de commande (TSG, TSG1, TSG2, TSG3, TSG4) comporte un microcontrôleur (uC2), lequel est en liaison avec la borne de commande du commutateur de puissance (LS1, LS2) pour la commande de celui-ci.

10. Système de sécurisation selon la revendication 9, **caractérisé en ce que** le microcontrôleur (µC2) du dispositif de commande (TSG, TSG1, TSG2, TSG3, TSG4) est en liaison active avec la liaison câblée électrique indépendante (St) pour l'analyse du potentiel actuel (Ub, GND).

11. Système de sécurisation selon la revendication 10, **caractérisé en ce que** le microcontrôleur (µC2) du dispositif de commande (TSG, TSG1, TSG2, TSG3, TSG4) est réalisé pour la transmission d'un statut du potentiel (Ub, GND) de la borne de commande, du commutateur de puissance (LS1, LS2) ou de l'état de l'unité électromécanique (M1, M2), à l'appareil de commande central (ZSG) via l'une quelconque des liaisons de signaux (CAN).

12. Système de sécurisation selon l'une quelconque des revendications précédentes, **caractérisé en ce que** le dispositif de commande (TSG, TSG1, TSG2, TSG3, TSG4) est disposé dans une portière de véhicule automobile, et **en ce que** l'appareil de commande central (ZSG) est disposé en-dehors de la portière du véhicule automobile, mais cependant à l'intérieur du véhicule automobile.

13. Système de sécurisation selon l'une quelconque des revendications précédentes, **caractérisé en ce qu'**en guise de commutateur de puissance (LS1, LS2), on peut commander un relais (RL1, RL2, RL3), et **en ce que** la liaison câblée électrique indépendante (St) est raccordée à une borne d'une bobine de relais (In1, In2, In3).

14. Procédé pour la sécurisation d'un dispositif de fermeture d'un véhicule automobile,dans lequel, pour commander une serrure d'un véhicule automobile à l'état de « verrouillage », dans lequel toutes les fonctions mécaniques de l'unité électromécanique sont désactivées,
- la capacité de bon fonctionnement d'un appareil de commande central (ZSG) et de liaisons de signaux (CAN) associées est analysée,
- des paramètres caractérisants de l'état de fonctionnement du véhicule automobile étant analysés,
- un potentiel (Ub, GND) pour la commande de la serrure étant appliqué à une liaison câblée électrique indépendante (St) des liaisons de signaux (CAN),
- une instruction de commande étant transmise via l'une quelconque des liaisons de signaux (CAN) de l'appareil de commande central (ZSG) à un dispositif de commande de portière (TSG, TSG1, TSG2, TSG3, TSG4), et
- par l'intermédiaire d'un commutateur de puissance (LS1, LS2) du dispositif de commande (TSG, TSG1, TSG2, TSG3, TSG4), à l'aide du potentiel (Ub, GND), une unité électromécanique (M1, M2) de la serrure est alimentée en courant, lorsque l'analyse permet de détecter un fonctionnement sans erreur de l'appareil de commande central (ZSG) et des liaisons de signaux (CAN).

15. Procédé selon la revendication 14, **caractérisé en ce qu'**une commande intempestive de la serrure du véhicule automobile à l'état de « verrouillage » est empêchée, et **en ce que**, en cas d'une défaillance, d'une perturbation ou d'un mode de secours déclenché d'un système de bus du véhicule automobile,
- la défaillance ou la perturbation est détectée par un appareil de commande central (ZSG) du véhicule automobile et un mode de secours est en particulier déclenché ou bien par le dispositif de commande (TSG, TSG1, TSG2, TSG3, TSG4) transmettant une information concernant le déclenchement d'un mode de secours via le système de bus à l'attention de l'appareil de commande central (ZSG), et
- l'appareil de commande central (ZSG) applique un potentiel de commande (Ub) à la liaison câblée (St) indépendante des liaisons de signaux (CAN) du système de bus, moyennant quoi l'on empêche un déclenchement du passage du dispositif de fermeture à l'état de « verrouillage » en fonction du potentiel de commande (Ub).
